# EUROPEAN PATENT APPLICATION

(11) **EP 3 835 739 A1**
(43) Date of publication of application: **16.06.2021**
(21) Application number: 19383094.0
(22) Date of filing: 11.12.2019
(51) Int. Cl.: G01J 3/02, G01N 21/03

(54) **SAMPLE HOLDER FOR FILM OR POWDER SAMPLES**

(71) Applicant: Fundació Institut Català de Nanociència i Nanotecnologia (ICN2), 08193 Bellaterra (ES); Consejo Superior de Investigaciones Científicas (CSIC), 28006 Madrid (ES)
(72) Inventor: ROSCINI, Claudio, 08037 BARCELONA (ES); CEBALLOS MAGO, Gustavo, 08195 SANT CUGAT DEL VALLÈS (Barcelona) (ES); RUIZ MOLINA, Daniel, 08206 SABADELL (Barcelona) (ES); MAYMÓ CAMÓS, Marc, 08191 RUBÍ (Barcelona) (ES)
(74) Representative: Herrero & Asociados, S.L.

(57) **Abstract**

Sample holder for performing measurements in a fluorimeter or UV-Vis-NIR spectrophotometer, the holder having a stage (1a) and a support (1b), the stage comprising two temperature adjustable metallic plates (7) opposed to each other, each provided with an optical window (12) in the center for holding a sample therebetween, a thermocouple (16) inserted in a hole (15) bored in one of the metallic plates (7), and electric heaters (9) embedded in each plate, wherein the support (1b) is capable of rotating for tuning the light incidence and/or light detection angle and the plates (7) are provided with magnets (13).

## Description

### BACKGROUND OF THE INVENTION

### Field of the Invention

The present invention relates to a sample holder for performing measurements in a fluorimeter or UV-Vis spectrophotometer. More in particular, the invention refers to a holder capable of keeping in film or powder samples while controlling experimental conditions such as temperature and measuring angle.

### Description of the Related Art

Current UV-Vis spectrophotometers, fluorimeters and spectroscopic instruments are becoming more and more compact equipment to save lab space and make the instrument more user-friendly. The disadvantage of this is that the equipment are becoming very specific for determined measurements and less flexible and modulable. This is particularly true for the sample chamber and holders. To compensate this, the providers sell different accessories to allow some specific and less conventional types of measurements. The accessories of sample holders that are more frequently commercialized today allow measurements of liquids in standard 1x1 cm cuvettes (standard measurements), analyses of small amount of samples, control of the temperature of sample holders for cuvettes, measurements of powders also with variable angle respect to the incident light, measurements carried out with an integrating sphere, the use of fibre optics for measuring outside the sample chamber, etc. These accessories are well defined and produced in large scale by the companies providing these equipments, to satisfy the demand of many companies or researchers needing them.

Nevertheless, these accessories often lack some characteristics that might difficult the desired tests, especially if these need to be made under certain experimental conditions. Also, these accessories are generally useful for one specific equipment and could not be adapted between different spectroscopic equipment of the same brand (for example from a UV-Vis spectrophotometer to a fluorimeter) or between the same type of equipment of different brands.

For example, a holder that can be easily adapted to both a known UV-Vis spectrophotometer and a fluorimeter, and that permits taking measurements of transparent or opaque films, solid powders (e.g. particles) at controlled temperatures, above room temperature needs to be designed and constructed.

### SUMMARY OF THE INVENTION

The present invention provides a sample holder for measuring film or powder samples in a fluorimeter or UV-Vis-NIR spectrometer in transmission or reflection modes, with controlled temperature, above room temperature, and tunable measuring angle. In order to achieve the above object, the present invention comprises a stage and a holder, the holder being made of two temperature adjustable metallic plates with optical windows in the center for holding the sample therebetween, means for adjusting the temperature of the plates, and a rotatable stage for selecting the angle. The stage is capable of rotating in such a way that the measuring angle can be adjusted.

The sample holder of the invention comprises thus a support and a stage fixed to said support. The stage comprises two temperature adjustable metallic plates opposed to each other, each provided with an optical window in the center for holding a sample therebetween, a thermocouple inserted in a hole bored in one of the metallic plates, and electric heaters embedded in each plate. The support is capable of rotating such that the light incidence and/or light detection angle can be varied, as the stage is fixed to the support. Further, the plates are provided with magnets, which eases the mounting of the sample in the optical window. The magnets are capable of providing a magnetic force n of 5 N to 15 N (for example, samarium-cobalt alloy of a 4mm diameter and a height of 2 mm, axially polarized) and can be provided in recesses embossed near the four corners of one of the plates. Preferably, the support consists of two parts rotatably mounted, an upper part holding the plates upright and two round plates that rotate one respect to the other and are provided with a notch-sphere mechanical coincidence assembly. The lower plate can be engraved with an angular scale.

The means for controlling the temperature of the plates are advantageously one electric heater in each plate and a thermocouple inserted between the plates at a position close to the windows but not covering them.

### BRIEF DESCRIPTION OF THE DRAWINGS

To complete the description and provide better understanding of the invention, a set of drawings is provided. Said drawings illustrate a preferred embodiment of the invention, which should not be interpreted as restricting the scope of the invention, but just as an example of how the invention can be carried out.
Figure 1 is a schematic structural view of the sample holder for measuring film or powder samples in a fluorimeter or UV-Vis-NIR spectrophotometer in transmission or reflection mode according to an embodiment of the present invention.
Figure 2 is an exploded view of the stage depicted in Fig. 1.

### DESCRIPTION OF THE PREFERRED EMBODIMENTS

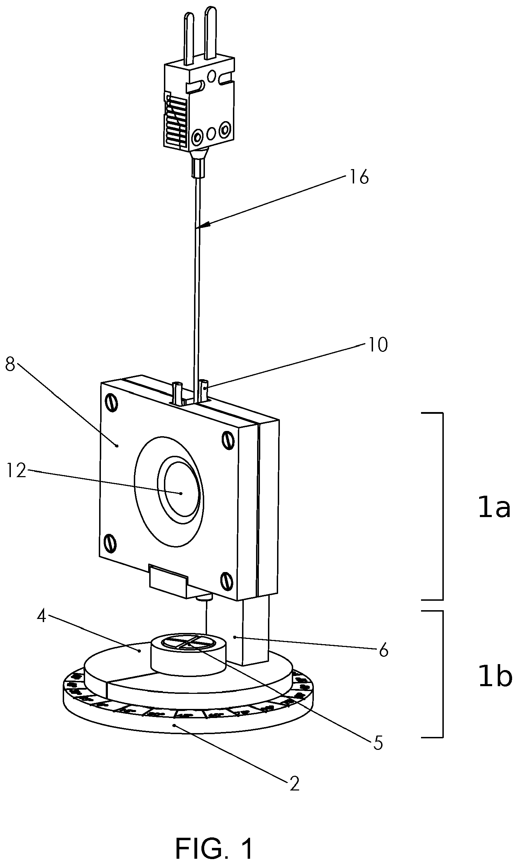

With reference to Fig. 1, the sample holder comprises a stage 1a and a support 1b. The stage is comprised of two temperature adjustable metallic plates 7 with optical windows 12 in the center for holding the sample in between, a thermocouple 16 inserted in anyone of the holes 15 bored in both metallic plates. The support 1b can rotate for tuning the light incidence and/or light detection angle.

Further, the metallic plates 7 are preferably, but not necessarily rectangular and made of a material with a high thermal conductivity in the range of 200-500 W/m°C, for example copper, in order to assure a homogeneous and stable heating of the sample. Further, in the center of the metallic plates a circular optical window 12 is recessed and fixed with a thermal conductive epoxy glue. The film or powder sample is pressed between both windows side by side.

The material of the window is such that its thermal conductivity is between 15 and 27 W/m°C, in order to assure thermal homogeneity. It must be also transparent in the light spectral range relevant for the analyzed sample (from 200 to 5500 nm). Preferably, the window is made of sapphire.

Further, each of the two metallic plates 7 are heated with help of flat electric heaters 9, attached to one side of the plate allowing for a homogeneous heating up to 200°C. The heater is preferably a polyimide isolated one but can be also a flat ceramic or Magnesium oxide (MgO) isolated heater.

The heaters 9 are wired to each other and connected to a power supply with temperature resistant isolated electrical wires 10. The higher the voltage applied to the heater, the higher the induced temperature. The temperature of the stage can be further controlled automatically using a temperature controller.

On the upper part of each of the plates 7 a deep hole 15 that reaches almost the sapphire window 12 is implemented to introduce a thermocouple 16, advantageously a K-Type thermocouple, to monitor and control the temperature of the ensemble plate-windows-sample. The heaters attached to the plate and the temperature resistant isolated electrical wires to interconnect them are protected with a temperature resistant black plastic cover made of carbon loaded Teflon.

The two copper plates are held together magnetically using magnets 13. In a preferred embodiment four magnets are placed in recesses embossed near the four corners of the plates 7. The coincident magnets of each plate are arranged facing to each other with contrary polarity to generate the magnetic attraction. The magnetic force holds together the two plates pressing a sample of around 2-3 mm thickness in between.

In a preferred embodiment, the magnets are small cylinders of a 4mm diameter and a height of 2 mm, axially polarized and made of a samarium-cobalt alloy. These magnets resist the working temperatures of the stage without depolarizing. The total nominal magnetic force that keeps the two plates together using the described magnets is around 10 Newton(N). A magnetic force in the range of 5 to 15 N is enough to hold samples of 1 to 4mm thickness.

Further, the support 1b consists of two parts rotatably mounted. The upper part 6 holds the plates 7 upright and rotates with respect to the bottom part 2. The rotation of the two parts of the support maintains the sample in the center of the rotation axis. This is made by means of the upper part 6, which has an inverted L shape and is attached by one leg to an upper circular plate 4 of the support 1b while the other leg is fixed to the stage 1a to assure positioning of the sample in the center of the rotation axis.

One of the plates 7 can be fixed permanently with screws to the upper part 6 of the support 1b while the counterpart plate 7 can be attached and detached to the fixed one simply manually, by applying a little force to overcome the magnetic force of magnets 13. That is, to mount or dismount the sample, no screws are needed, which is a great advantage (especially when a series of several samples need to be measured) compared to the prior art.

Further, the upper part 6 is fixed to a round plate 4 with a screw 5. The round plate rotates about a round engraved lower plate 2 that serves to select the rotation angle, as it shows an angular scale with marks, in the preferred embodiment every 15°. To rotate the sample respect to the incident radiation, the stage 1a can be rotated by hand aligning a pointer engraved in the round plate 4 with the angular scale engraved in the round plate 2. The two round plates 4 and 2 rotate one respect to the other stopping in defined fixed positions determined by a notch-sphere mechanical coincidence assembly. This mechanism is constructed as follows: in the upper round plate 4 there are three steel spheres partially recessed and arranged triangularly centered in the plate. In the bottom round plate 2 there are notches arranged all around the circumference where the three steel spheres can fit stably. The angular distance between the notches will constrain the rotation to the steps of 15°. This angular distance can be tuned during the manufacturing process of the support to modify the rotation's angular resolution. The two round plates are pressed together by a compressed steel spring 18 held between the shoulder pivot screw 5 and the upper round plate 4.

Further, the bottom part of the lower plate 2 can be attached to an adjustable height lifting mechanism to match the geometry of the different instruments where the holder may be installed.

The holder can be installed in the different instruments by mean of magnetic coupling bases. One magnetic base is fixed to the stage and the counterpart is fixed in the sample chamber of the particular spectrometer as a docking port. The stage can be easily detached by hands to facilitate de exchange of samples outside of the typical narrow sample chamber of the instruments.

The invention provides a solution for measuring reflectance (at different angles, for opaque solids), transmission (transparent materials) and emission (rectangle and other angles, for both transparent and opaque films) of solid. The possibility of rotating the angle of the sample respect to the incident radiation allows reducing the scattering coming from opaque materials and reflection issues deriving from the incident light. The holder allows measurements at controlled temperature (from room temperature up to approx. 200 °C). This holder is suitable for UV-Vis, NIR, IR, Raman, transient absorption spectroscopies and fluorimeters (for any type of emission, e.g. fluorescence, phosphorescence, etc., steady state or time-resolved) for measuring films or powders at controlled temperatures and tunable radiation incidence angle. The lifting mechanism adjust the overall height of the sample stage to match the geometry of the different instruments. The sample stage is compact, easy to operate and highly customizable to fit in many spectroscopy instruments. The sample can be easily replaced by separating the two plates magnetically attached with the hand, which is easy and convenient to operate.

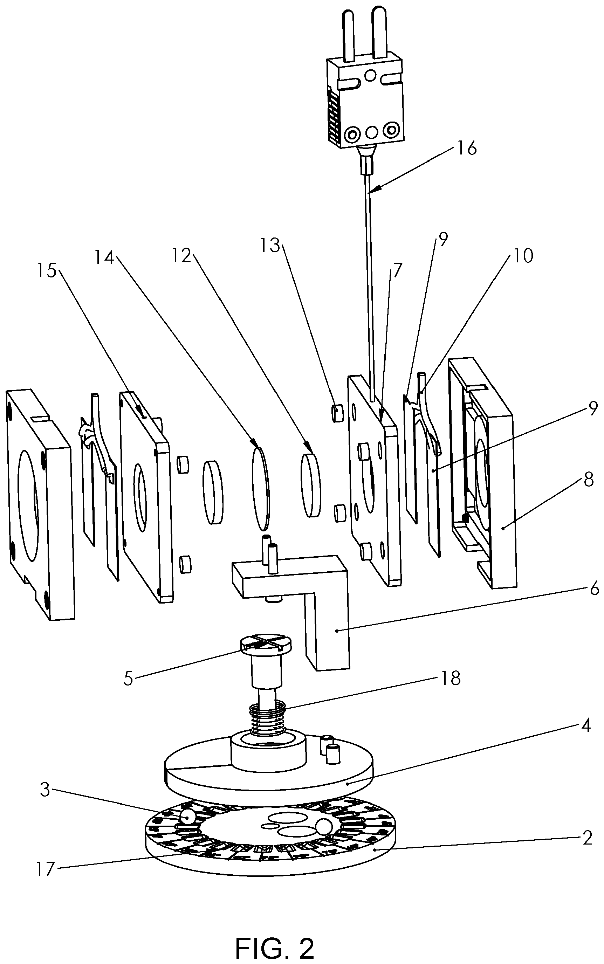

A sample holder according to the invention is suitable for measuring film and powder samples in molecular spectroscopy instruments according to the embodiment is suitable for a UV-Vis spectrometer such as Agilent Cary60 and Cary4000 and a fluorimeter such as PTI Quanta Master 300 (Horiba). The sample holder includes two flat rectangular copper plates 7 that are attached together magnetically with the help of four samarium-cobalt magnets 13 inserted at the corners of each plate. The plates are heated by mean of two polyimide isolated flat electric heater elements 9 attached laterally on both sides of the sapphire window 12. The two heaters on each plate 10 are wired electrically in series. The sample 14 is pressed between the two plates using the magnetic force. On the upper part each of the copper plates 7 a deep hole that reach almost the sapphire window 12 is implemented to introduce a K-Type thermocouple. The heaters attached to the plate and the electrical wires are protected with a temperature resistant black plastic covers 8 made of carbon loaded Teflon. The left plate in the Figure 2 is fixed to the L support 6, which is attached to the upper round plate 4 of the support. The two round plates 4, and 2 rotate one respect the other. In the upper round plate there are three steel spheres 3 partially recessed and arranged triangularly centered in the plate. In the bottom round plate there are notches arranged all around the circumference where the three steel spheres can fit stable. The angular distance between the notches will constrain the rotation to the steps of 15°. The two round plates are pressed together by a compressed steel spring 18 held between a shoulder pivot screw 5 and the upper round plate. By mean of magnetic coupling bases the holder can be installed in the two spectrophotometer provided the counterpart is fixed in the sample chamber of the particular spectrophotometer as a docking port matching the right height.

### Examples:

### 1. Absorption spectrum of transparent film

The holder was placed in the sample chamber of the Agilent Cary 60 UV-Vis spectrophotometer in the path of the light between the light source and the detector. The support 1b was screwed on top of a holed basement previously screwed on the equipment. The holder height was regulated to have the detecting beam passing at the centre of the window 12 before reaching a detector. The transparent window of the stage 1a was perpendicular to the detecting beam. A transparent film of 1.5 x 1.5 cm² and 1-3 mm of diameter was put inside the stage 1a and maintained between the two heating plates 7. Measurements at different temperatures (room temperature-190 °C) were carried out in transmission mode by applying increasing voltages (through a connected power supplier) to the heating layers.

A calibration curve was obtained to have a correlation between applied voltage and supplied power. The measured temperature at each applied voltage was subjected to variations depending on the room temperature.

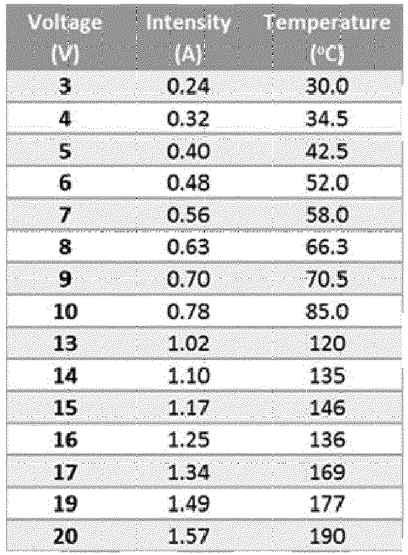

### 2. Time-resolved absorption measurements of transparent films

The holder was placed in the sample chamber of the Agilent Cary 60 UV-Vis spectrophotometer in the path of the light between the light source and the detector. The support 1b was screwed on top of a holed basement previously screwed on the equipment. The holder height was regulated to have the detecting beam passing at the centre of the window 12 before reaching a detector. The transparent window of the stage 1a was perpendicular to the detecting beam. A transparent film of 1.5 x 1.5 cm² and 1-3 mm of diameter was put inside the stage 1a and maintained between the two heating plates 7.

In the case the absorbing species evolves (e.g. into another species) over time, changing its absorption intensity and spectrum, the absorption spectrum variation (and thus the changing rate of the species) could be measured (process rate instrumental resolution limit is 80 points/s). By increasing the temperature of the sample holder, it can be evaluated how the changing rate of the absorption spectrum of the species (i.e. its concentration) varies with the temperature. Kinetic rates of formation/disappearance/conversion of species absorbing in the UV-Vis-NIR could be obtained at different temperatures.

### 3. Emission spectrum of transparent film (45 °)

The holder was placed in the sample chamber of the PTI Quanta Master fluorimeter 300 (Horiba). The support was screwed to the fluorimeter base, in place of the standard liquid sample holder (same position), taking advantage of the present screwed holes. The stage 1a was fixed through the L upper part 6 onto the lower part 2 of the support 1b. The holder occupies the position of the ideal intersection between the direction of the excitation beam deriving from the light source (pulsed or continuous wave) and the direction of the emitted light path to the detector. The holder height was regulated to have the excitation beam and the detection light path in the same plane. The transparent window of the holder was set at 45° respect to the detecting beam. A transparent film of 1.5 x 1.5 cm² and 1-3 mm of diameter was put inside the holder and maintained between the two heating layers by the magnets 13, without screws. The fluorescence emission spectrum of the film was measured at 45°C with respect to the plane of the window (90° respect to the excitation beam). Measurements at different temperatures (room temperature-190°C) were carried out in reflectance mode by applying increasing voltages (through a connected power supplier) to the heating layers.

### 4. Emission spectrum of transparent film (30 °)

The holder was placed in the sample chamber of the PTI Quantamaster fluorimeter 300 (Horiba). The holder support 1b was screwed to the fluorimeter base, in place of the standard liquid sample holder (same position), taking advantage of the present screwed holes. The holder occupies the position of the ideal intersection between the direction of the excitation beam deriving from the light source (pulsed or continuous wave) and the direction of the emitted light path to the detector. The holder height was regulated to have the excitation beam and the detection light path in the same plane. The transparent windows 12 of the holder were set at 30° respect to the detecting beam. A transparent film of 1.5 x 1.5 cm² and 1-3 mm of diameter was put inside the holder and maintained between the two heating plates 7 by the magnets 13, without screws. Fluorescence measurements at different temperatures (room temperature-190 °C) were carried out in reflectance mode by applying increasing voltages (through a connected power supplier) to the heating layers.

### 5. Emission spectrum of transparent film (60 °)

The holder was placed in the sample chamber of the PTI Quantamaster fluorimeter 300 (Horiba). The support base 2 was screwed to the fluorimeter base, in place of the standard liquid sample holder (same position), taking advantage of the present screwed holes. The holder occupies the position of the ideal intersection between the direction of the excitation beam deriving from the light source (pulsed or continuous wave) and the direction of the emitted light path to the detector. The holder height was regulated to have the excitation beam and the detection light path in the same plane. The transparent window of the holder was set at 60° respect to the detecting beam. A transparent film of 1.5 x 1.5 cm² and 1 mm of diameter was put inside the holder and maintained between the two heating layers by magnetic contacts, without screws. Fluorescence measurements at different temperatures (room temperature-190 °C) were carried out in reflectance mode by applying increasing voltages (through a connected power supplier) to the heating layers. The rotation of the holder did not require the removal of the film from inside the holder.

### 6. Emission spectrum of opaque films (30°, 45°, 60 °)

The same measurements of the examples 3-5 could be carried out for opaque samples such as opaque films. Working in reflection mode assures the possibility of measuring opaque samples. The different acquisition angles might improve the fluorescence measurements quality thanks to the selective reduction of light scattering.

### 7. Emission spectrum of micro/nanoparticles powder (30°, 45°, 60°)

The same measurements of the examples 3-5 could be carried out for opaque samples, such as micro/nanoparticles powder (particles diameter of 5nm-100µm). In this case the micro/nanoparticle powder is deposited onto one of the windows 12 of the stage 1a and trapped with the other plate 7 through magnetic contacts. Working in reflection mode assures the possibility of measuring opaque samples. The different angles might improve the fluorescence measurements quality thanks to the selective reduction of light scattering.

### 8. Phosphorescence emission spectrum and lifetime

The setups described in the Examples 3-6 could be used to measure phosphorescence emission spectrum and lifetime.

As it is used herein, the term "comprises" and derivations thereof (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.) to be within the general scope of the invention as defined in the claims.

## Claims

1. Sample holder for performing measurements in a fluorimeter or UV-Vis-NIR spectrophotometer, the sample having a support (1b) and a stage (1a) fixed to said support (1b), the stage comprising two temperature adjustable metallic plates (7) opposed to each other, each provided with an optical window (12) in the center for holding a sample therebetween, a thermocouple (16) inserted in a hole (15) bored in one of the metallic plates (7), and electric heaters (9) embedded in each plate, **characterized in that** the support (1b) is capable of rotating for tuning the light incidence and/or light detection angle with respect to the stage (1a), and the plates (7) are provided with magnets (13).

2. Sample holder according to claims 1 or 2 wherein the magnets are capable of providing a magnetic force of 5 N to 15 N.

3. Sample holder according to any of the previous claims, wherein plates (7) are of a square shape and are provided each with four magnets (13) placed in recesses embossed near the four corners.

4. Sample holder according to any of the previous claims wherein the magnets are cylinders of a samarium-cobalt alloy of a 4mm diameter and a height of 2 mm, axially polarized.

5. Sample holder according to any of the previous claims, wherein the support (1b) is provided with two round plates (2, 4) that rotate one respect to the other and are provided with a notch-sphere mechanical coincidence assembly.

6. Sample holder according to claim 5 wherein the lower plate (2) is engraved with an angular scale.
